# EUROPÄISCHE PATENTSCHRIFT

(11) **EP 0 992 373 B1**
(45) Veröffentlichungstag und Bekanntmachung des Hinweises auf die Patenterteilung: **01.07.2009**
(21) Anmeldenummer: 99115211.7
(22) Anmeldetag: 31.07.1999
(51) Int. Cl.: B60G 17/015, B60G 21/055, B60T 8/00, B60T 8/32, B60K 28/16

(54) **System und Verfahren zur Bremswegverkürzung und Traktionsverbesserung bei Kraftfahrzeugen**
System and method for shortening the braking distance and improving traction in motor vehicles
Système et méthode pour raccourcir la distance de freinage et améliorer la traction dans des véhicules automobiles

(30) Priorität: 09.10.1998 DE 19846500
(43) Veröffentlichungstag der Anmeldung: 12.04.2000
(73) Patentinhaber: ROBERT BOSCH GMBH, 70442 Stuttgart (DE)
(72) Erfinder: Schülke, Armin, 71706 Hardthof (DE); Verhagen, Armin-Maria, 71701 Schwieberdingen (DE); Stoller, Roland, 70734 Fellbach (DE)

(56) Entgegenhaltungen:
- EP-A- 0 508 640
- DE-A- 19 808 673
- US-A- 5 229 955
- US-A- 5 482 133
- US-A- 5 517 414
- US-A- 5 563 792
- US-A- 5 774 821
- PATENT ABSTRACTS OF JAPAN vol. 009, no. 152 (M-391), 27. Juni 1985 (1985-06-27) & JP 60 029317 A (NISSAN JIDOSHA KK), 14. Februar 1985 (1985-02-14)
- PATENT ABSTRACTS OF JAPAN vol. 011, no. 172 (M-595), 3. Juni 1987 (1987-06-03) & JP 62 004620 A (MAZDA MOTOR CORP), 10. Januar 1987 (1987-01-10)

## Beschreibung

### Stand der Technik

Die Erfindung befaßt sich mit einem Verfahren und einem System zur Bremswegverkürzung und Traktionsverbesserung bei einem mit einem Wankstabilisierungssystem ausgerüsteten Kraftfahrzeug, wobei das Wankstabilisierungssystem mindestens einen Stellantrieb an mindestens einer Achse aufweist, der zwischen den beiden Hälften eines Fahrwerkstabilisators angeordnet ist.

Aus "Konstruktion und Elektronik" Nr. 17, Seite 9, ist ein Wankstabilisierungssystem für Kraftfahrzeuge bekannt. Bei einem solchen System wird, um die Wankbewegung des Fahrzeugaufbaus bei Kurvenfahrten zu unterdrücken, über eine geeignete Stellfeder ein Gegenmoment auf den Aufbau aufgebracht. Dabei erfolgt die Erzeugung dieses Moments zweckmäßigerweise an den Stabilisatoren der Vorder- und Hinterachse. Die konventionellen, als Drebstabfedern ausgebildeten, Stabilisatoren werden aufgetrennt und zwischen den beiden Stabilisatorhälften ein Schwenkantrieb angeordnet, der eine aktive Verdrehung und somit eine Verspannung der Stabilisatorhälften erzeugen kann. Mit Hilfe eines solchen Systems werden einerseits der Fahrkomfort verbessert, indem die Wankbewegung des Fahrzeugaufbaus unterdrückt wird, und außerdem können die linke und rechte Fahrzeugseite bei einseitigen Fahrbahnanregungen in der Kurvenfahrt entkoppelt werden.

Das erwähnte bekannte System verwendet einen hydraulischen Stellantrieb, der besondere, zum Teil teure Installationen im Fahrzeug und außerdem auch bei Geradeausfahrt oder quasistationären Zuständen des Fahrzeugs Leistung benötigt, so daß auch bei Geradeausfahrt sogenannte Leerlaufpumpenverluste auftreten.

Es werden derzeit Systeme zur Wankstabilsierung mit elektromechanischem Antrieb entwickelt, die die hydraulischen Komponenten des bekannten Wankstabilisierungssystems entbehrlich machen.

Beim Abbremsen eines Kraftfahrzeugs, das auf einer Fahrbahn fährt, auf der die linken und rechten Räder jeweils einen unterschiedlichen Reibwert erfahren, d.h. bei linksseitig und rechtsseitig unterschiedlich griffiger Fahrbahnoberfläche (auf sog. µ-Split-Fahrbahnen), läßt sich durch die herkömmliche ABS-Technik nur schwer ein bremswegverkürzender Ausgleich zwischen der linken und rechten Kraftfahrzeugseite erzielen.

Die US 5,517,414 A zeigt eine aktive Fahrwerkregelung, bei der durch eine Verstellung des Fahrwerks die Radaufstandskräfte zur Traktionsverbesserung beeinflusst werden. Wird dabei festgestellt, dass bei Vorliegen eines positiven Radschlupfes die Reibwerte der Fahrbahn auf den beiden Fahrzeugseiten unterschiedlich sind, so wird die Radaufstandskraft des Antriebsrades auf der Fahrzeugseite mit dem geringeren Reibwert sowie die Radaufstandskraft des diagonal gegenüberliegenden Rades um das gleiche Maß erhöht.

### Aufgaben und Vorteile der Erfindung

Es ist deshalb Aufgabe dieser Erfindung, ein Verfahren und ein System zur Bremswegverkürzung bei linksseitig und rechtsseitig unterschiedlich griffigen Fahrbahnoberflächen unter Einsatz eines Wankstabilisierungssystems anzugeben.

Die Erfindung geht zur Lösung der obigen Aufgabe von der Idee aus, bei unterschiedlich griffiger Fahrbahnoberfläche (µ-Split-Fahrbahn) durch diagonale Verspannung der Stellantriebe einer Wankstabilisierung beim Bremsen eine Verkürzung des Bremswegs zu erreichen.

Bei einem mit einem Wankstabilisierungssystem ausgerüsteten Fahrzeug besteht außer der Möglichkeit der Horizontierung des Fahrzeugaufbaus mittels gleichsinniger Verspannung die Möglichkeit, die Stellantriebe an den Achsen gegensinnig zu verspannen. Mit dieser Maßnahme ist keine Aufbauneigung verbunden, es können aber jeweils über die Fahrzeugdiagonale die Aufstandskräfte der Räder erhöht bzw. erniedrigt werden. Da sich die übertragbare Längs- oder Umfangskraft der Räder in gewissen Bereichen proportional zur Aufstandskraft verhält, kann durch Belasten des vorderen Hoch-µ-Rades und des hinteren Niedrig-µ-Rades bei gleichzeitiger Entlastung des vorderen Niedrig-µ-Rades und des hinteren Hoch-µ-Rades der Bremsweg deutlich verkürzt werden (gemessen wurde eine Verkürzung des Bremswegs um bis zu 15% bei Abbremsen aus einer Geschwindigkeit von 110 km/h).

Das durch die stärkere Verzögerung des Hoch-µ-Rades verstärkt auftretende Giermoment des Fahrzeugs kann durch unterschiedliche Maßnahmen abgefangen werden. Ein allmähliches Verspannen der Stellantriebe gibt dem Fahrer beispielsweise die Möglichkeit, sich auf den größeren Kompensationslenkwinkel einzustellen, wobei durch diese Maßnahme ein Teil der Bremswegreduktion verloren geht.

Wenn in einem Fahrzeug ein automatisches Lenksystem oder ein Lenkunterstützungssystem vorhanden ist, das dem am Lenkrad eingestellten Lenkradwinkel einen durch andere Parameter bestimmten Zusatzlenkwinkel überlagert, kann die entsprechende Gierkompensation während des Eingriffs des den Bremsweg verkürzenden Stellantriebs der jeweils gelenkten Achse bereits bei der Erfassung der unterschiedlichen Fahrbahnbeschaffenheit, z. B. durch die Bremsdruckunterschiede der Räder, zeitgleich mit dem bremswegverkürzenden Be- und Entlasten der Räder durch das erfindungsgemäße System stattfinden, wodurch der volle Effekt der Bremswegreduktion erreicht ist.

Analog zum Bremsen läßt sich auch eine Traktionsverbesserung erreichen. Im Antriebefall kann das erfindungsgemäße System durch die Erhöhung der Normalkraft am Niedrig-µ-Rad durch die Diagonalverspannung der Stellantriebe an den Achsen die Vortriebskraft erhöhen.

Der mit dem erfindungsgemäßen Verfahren und System angestrebte Effekt läßt sich nicht nur beim Einsatz eines Stellantriebs pro Achse sondern auch bei radindividuellen Steilem, sowie bei anderen Stellantriebskonzepten, die keinen elektromotorischen Stellantrieb enthalten, sondern z.B. hydraulisch, pneumatisch usw. arbeiten, erreichen.

Im folgenden wird das erfindungsgemäße Verfahren und System anhand schematischer Darstellungen dreier verschiedener Fahrzeugzustände erläutert.

### Zeichnung

- Fig. 1: zeigt einen Fahrzustand, bei dem ein Fahrzeug auf einer Fahrbahn mit links und rechts unterschiedlichem Reibwert gebremst wird, wobei entgegengesetzt zum erfindungsgemäßen Verfahren vorgegangen wird.
- Fig. 2: zeigt schematisch ein Fahrzeug auf einer Fahrbahn mit links und rechts unterschiedlichem Reibwert, bei dem keine Maßnahmen zur Bremswegverkürzung mit Hilfe eines Wankstabilisierungssystems getroffen werden,
- Fig. 3: zeigt schematisch ein Fahrzeug auf einer Fahrbahn mit links und rechts unterschiedlichem Reibwert, bei dem ein Wankstabilisierungssystem gemäß dem erfindungsgemäßen Verfahren eingesetzt wird.

### Ausführungsbeispiel

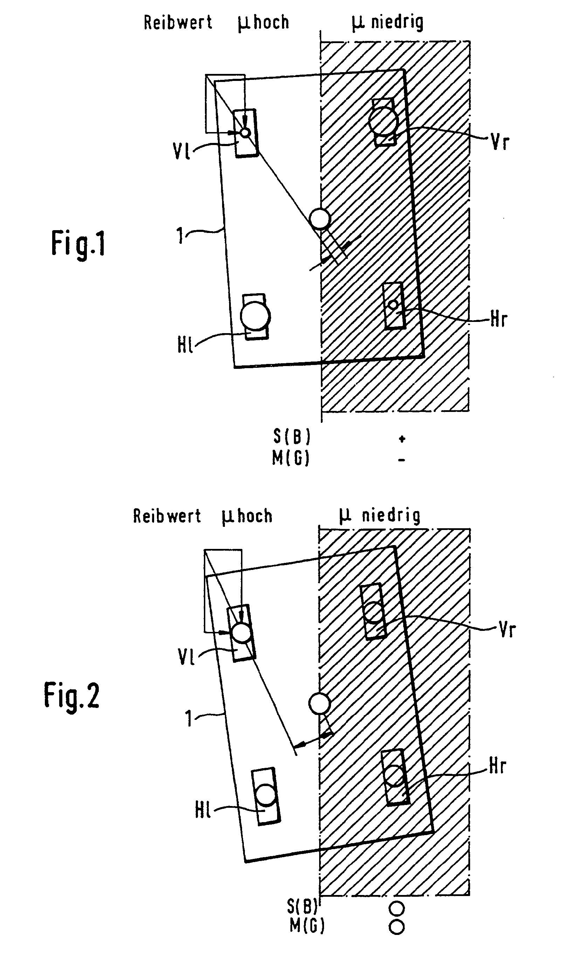

Gemäß Fig. 1 fährt ein Fahrzeug 1 mit einem linken und rechten Vorderrad Vl, Vr und einem linken und rechten Hinterrad Hl, Hr auf einer Fahrbahn auf der in Fahrtrichtung links ein hoher Reibwert und rechts ein niedriger Reibwert µ vorliegt. Bei einem Experiment wurde mit Hilfe eines im Fahrzeug vorhandenen Wankstabilisierungssystems das vordere Niedrig-µ-Rad, d.h. das rechte Vorderrad Vr, und das hintere Hoch-µ-Rad, d.h. das linke Hinterrad Hl, zusätzlich belastet, während gleichzeitig das Hoch-µ-Vorderrad, d.h. das linke Vorderrad Vl, und das Niedrig-µ-Hinterrad, d.h. das rechte Hinterrad Hr, entlastet wurden.

Es stellte sich eine Verlängerung des Bremswegs und eine Verringerung des Giermoments ein. Das am linken Vorderrad Vl angedeutete Kräfteparallelogramm zeigt, daß die verringerte Aufstandskraft des linken Vorderrads Vl zu einer verringerten übertragbaren Umfangskraft führt. Die Größe der an den Rädern angedeuteten Punkte symbolisiert die Größe der Aufstandskraft, die von dem Wankstabilisierungssystem auf die Räder aufgebracht wird.

Fig. 2 zeigt den Fahrzeugzustand bei einem Bremsversuch auf einer hinsichtlich des Reibwerts µ links und rechts unterschiedlich gearteten Fahrbahn, wobei wie in Fig. 1 der Reibwert auf der in Fahrtrichtung gesehenen linken Fahrbahn hoch und auf der rechten Fahrbahn niedrig ist.

Die für jedes Rad gleich große Aufstandskraft, wie sie durch die gleich großen Punkte in den Rädern symbolisiert ist, zeigt, daß keine Maßnahmen zur Verringerung des Bremswegs mit einem Wankstabilisierungssystem aktiviert werden, da die Aufstandskräfte der Räder gleich groß sind. Dies bedeutet, daß sich der Bremsweg S(B) und das Giermoment M(G) neutral verhalten.

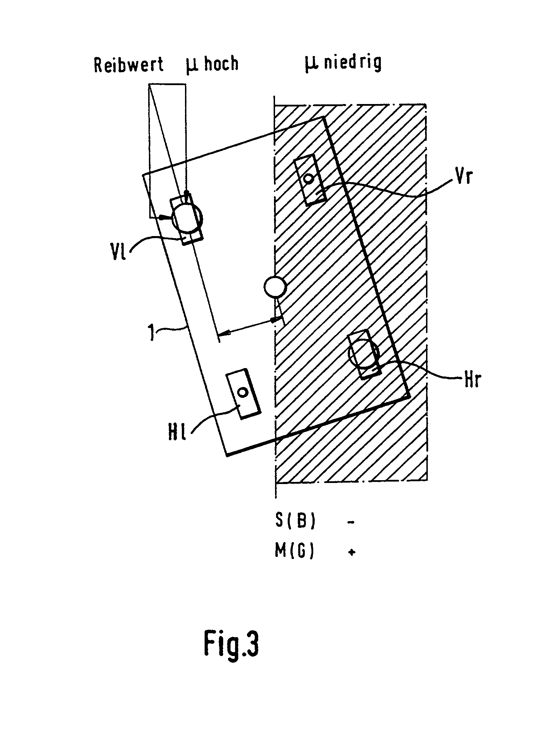

In Fig. 3 befindet sich das Fahrzeug 1 während der Bremsung ebenfalls auf einer Fahrbahn mit in Fahrtrichtung gesehen links hohem Reibwert µ und rechts niedrigem Reibwert µ. Die unterschiedlichen Reibwerte werden durch Messung und Vergleich ermittelt, und in der dargestellten Konstellation werden die Stellantriebe des Wankstabilisierungssystems an den Achsen diagonal gegenseitig so verspannt, daß das vordere Hoch-µ-Rad, d.h. das linke Vorderrad Vl und das hintere Niedrig-µ-Rad, d.h. das rechte Hinterrad Hr, zusätzlich belastet und gleichzeitig das vordere Niedrig-µ-Rad, d.h., das rechte Vorderrad Vr, und das hinter Hoch-µ-Rad, d.h. das linke Hinterrad Hl, entlastet werden. Dies ist durch die großen und kleinen Kreispunkte in den Rädern symbolisiert. Dabei verkürzt sich der Bremsweg S(B), wie durch ein Minuszeichen im unteren Teil der Fig. 3 angedeutet ist. Gleichzeitig erhöht sich das Giermoment M(G).

Dieses durch die stärkere Verzögerung des Hoch-µ-Rades, d.h., bei dem in Fig. 3 gezeigten Beispiel, des linken Vorderrades, verstärkt auftretende Giermoment kann z.B. dadurch abgefangen werden, daß der Fahrer durch ein allmähliches Verspannen der Stellantriebe die Möglichkeit hat, sich auf den größeren Kompensationslenkwinkel einzustellen. Dabei geht jedoch ein Teil der Verringerung des Bremsweges verloren.

Wenn das Fahrzeug mit einem automatischen Lenksystem ausgerüstet ist, das es erlaubt z.B. an der Vorder- oder Hinterachse einen Zusatzlenkwinkel einzustellen, kann die entsprechende Kompensation des Giermoments schon beim Erkennen der unterschiedlichen Fahrbahnbeschaffenheit gleichzeitig mit dem Be- und Entlasten der Räder durch das Wankstabilsierungssystem stattfinden. Dabei wird der volle Effekt der Bremswegreduktion erreicht.

Mit der in Fig. 3 veranschaulichten Methode ließ sich bei einem Experiment auf einer Fahrbahn mit geteiltem Reibwert µ eine Bremswegverringerung von bis zu 15% erreichen.

Analog zum Bremsen läßt sich mit dem Wankstabilisierungssystem auch eine Traktionsverbesserung erreichen. Im Antriebsfall läßt sich durch Erhöhen der Normalkraft am Niedrig-µ-Rad der angetriebenen Achse die Vortriebskraft erhöhen (nicht dargestellt).

Generell läßt sich der erfindungsgemäße Effekt nicht nur beim Einsatz von einem Stellantrieb pro Achse, sondern auch bei radindividuellen Stellantrieben, sowie auch bei anderen Stellantriebskonzepten erreichen, wie z.B. bei hydraulischen und pneumatischen Stellantrieben.

Ein das erfindungsgemäße Verfahren durchführendes System enthält mit einem Prozeßrechner verbundene Sensoren, die die Reibwerte µ der einzelnen Räder messen und dem Prozeßrechner entsprechende Signale zuführen. Ebenfalls ist es möglich, den Schlupf oder den Kraftschluß zu messen. Dabei ist es beispielsweise möglich, Druckschätzungen oder -messungen der Radbremsdrücke ggf. mit Hilfe der Raddrehzahlen durchzuführen. Der Prozessrechner führt den Vergleich der links gemessenen Reibwerte mir den rechts gemessenen Reibwerten durch und stellt fest, welcher Stellantrieb jeweils zur gegenseitigen Verspannung der Achsen beaufschlagt werden muß.

Wenn ein Lenksystem zur Verfügung steht, das dem am Lenkrad eingestellten Lenkwinkel einen Zusatzwinkel hinzufügen kann, gibt der Prozeßrechner die Kompensationssignale zur Gierkompensation zeitgleich mit den Stellsignalen für die Stellantriebe des Wankstabilisierungssystems aus, die zur Bremswegverkürzung oder Traktionsverbesserung erzeugt wurden.

## Patentansprüche

1. Verfahren zur Bremswegverkürzung eines Kraftfahrzeugs, das ein Wankstabilisierungssystem mit mindestens einem Stellantrieb an mindestens einer Achse aufweist, der zwischen den beiden Hälften eines Fahrwerkstabilisators angeordnet ist, wobei bei fahrendem Fahrzeug
- ein Reibwert (µ) bzw. ein dem Reibwert (µ) vergleichbarer Wert zwischen jedem Rad und der Fahrbahnoberfläche gemessen oder geschätzt wird,
- die so ermittelten Reibwerte (µ) der Räder der linken und rechten Fahrzeugseite miteinander verglichen werden, und
- wenn der Vergleich der Reibwerte einen Unterschied (hoch-µ, niedrig-µ) zwischen den Fahrzeugseiten ergibt, die Stellantriebe an den Achsen diagonal gegensinnig so verspannt werden, dass die Aufstandskräfte der Räder entsprechend den gemessenen unterschiedlichen Reibwerten derart erhöht bzw. erniedrigt werden, dass das vordere Hoch-µ-Rad und das hintere Niedrig-µ-Rad belastet und gleichzeitig das vordere Niedrig-µ-Rad und das hintere Hoch-µ-Rad entlastet werden.

2. System zur Bremswegverkürzung bei einem Kraftfahrzeugs zur Durchführung des Verfahrens nach dem vorangehenden Anspruch, **dadurch gekennzeichnet, dass** Sensoren zur Messung eines Reibwerts (µ) bzw. eines dem Reibwert (µ) vergleichbaren Werts zwischen jedem Rad und der Fahrbahnoberfläche, Vergleichsmittel zum Vergleich der mit den Sensoren gemessenen Reibwerte der Räder der linken und rechten Fahrbahnseite miteinander, und Stellmittel zur Ausgabe eines Stellsignals an den Stellantrieb des Wankstabilisierungssystems derart vorgesehen sind, daß die Achsen diagonal gegensinnig so verspannt werden, dass die Aufstandskräfte der Räder entsprechend den gemessenen unterschiedlichen Reibwerten derart erhöht bzw. erniedrigt werden, dass das vordere Hoch-µ-Rad und das hintere Niedrig-µ-Rad belastet und gleichzeitig das vordere Niedrig-µ-Rad und das hintere Hoch-µ-Rad entlastet werden.

3. System nach Anspruch 2, **dadurch gekennzeichnet, dass** die Sensoren mit einem die Vergleichsmittel und die Stellmittel enthaltenden Prozessrechner einer Fahrzeugsteuereinrichtung verbunden sind.

4. System nach Anspruch 3, das außerdem ein an jeder gelenkten Achse angreifendes automatisches Lenksystem aufweist, **dadurch gekennzeichnet, dass** der Prozessrechner außerdem dazu eingerichtet ist, das durch die stärkere Verzögerung des Hoch-µ-Rades auftretende Giermoment des Fahrzeugs durch Ausgabe von Lenkwinkelstellsignalen an das automatische Lenksystem auszugleichen, so daß zu dem am Lenkrad eingestellten Lenkradwinkel ein das auftretende Giermoment kompensierender Zusatzlenkwinkel erzeugt wird.

5. System nach Anspruch 4, **dadurch gekennzeichnet, dass** der Prozessrechner die zur Einstellung des Zusatzlenkwinkels erzeugten Signale gleichzeitig mit der Ausgabe der zur diagonalen gegensinnigen Verspannung der Achsen erzeugten Stellsignale an die Stellantriebe des automatischen Lenksystems ausgibt.

## Claims

1. Method for shortening the braking distance of a motor vehicle which has a roll stabilization system with at least one actuator drive on at least one axle, which actuator drive is arranged between the two halves of a chassis stabilizer, wherein, when the vehicle is travelling
- a coefficient of friction (µ) or a value which is comparable to the coefficient of friction (µ) between each wheel and the surface of the carriageway is measured or estimated,
- the coefficients of friction (µ) of the wheels which are determined in this way for the left-hand and right-hand sides of the vehicle are compared with one another, and
- if the comparison between the coefficients of friction reveals a difference (high µ, low µ) between the sides of the vehicle, the actuator drives on the axles are tensioned diagonally in opposite directions in such a way that the contact forces of the wheels are increased or decreased in accordance with the different measured coefficients of friction in such a way that the front high µ wheel and the rear low µ wheel are loaded and at the same time the front low µ wheel and the rear high µ wheel are relieved of loading.

2. System for shortening the braking distance in a motor vehicle for carrying out the method according to the preceding claim, **characterized in that** sensors for measuring a coefficient of friction (µ), or a value comparable to the coefficient of friction (µ), between each wheel and the surface of the carriageway, comparison means for comparing the coefficients of friction, measured with the sensors, of the wheels on the left-hand and right-hand sides of the carriageway with one another, and actuator means for outputting an actuation signal to the actuator drive of the roll stabilization system are provided in such a way that the axles are tensioned diagonally in opposite directions in such a way that the contact forces of the wheels are decreased or increased in accordance with the different measured coefficients of friction in which a way that the front high µ wheel and the rear low µ wheel are loaded and at the same time the front low µ wheel and the rear high µ wheel are relieved of loading.

3. System according to Claim 2, **characterized in that** the sensors are connected to a process computer, containing the comparison means and the actuator means, of a vehicle control device.

4. System according to Claim 3, which also has an automatic steering system which acts on each steered axle, **characterized in that** the process computer is also configured to compensate the yaw moment occurring due to the relatively high acceleration of the high µ wheel, by outputting steering angle actuation signals to the automatic steering system, with the result that an additional steering angle which compensates the yaw moment which occurs is generated for the steering wheel angle which is set at the steering wheel.

5. System according to Claim 4, **characterized in that** the signals which are generated for setting the additional steering angle are output by the process computer at the same time as the actuation signals which are generated for diagonally tensioning the axles in opposite directions are output to the actuator drives of the automatic steering system.

## Revendications

1. Procédé pour raccourcir la course de freinage d'un véhicule automobile qui présente un système de stabilisation du mouvement de roulis comprenant au moins un servomécanisme sur au moins un essieu, lequel est disposé entre les deux moitiés d'un stabilisateur de train, avec lequel, lorsque le véhicule est en déplacement,
- un coefficient de friction (µ) ou une valeur comparable au coefficient de friction (µ) est mesuré ou estimé entre chaque roue et la surface de la chaussée,
- les coefficients de friction (µ) ainsi déterminés du côté gauche et du côté droit du véhicule sont comparés entre eux et
- lorsque la comparaison des coefficients de friction produit une différence (µ élevé, µ faible) entre les côtés du véhicule, les servomécanismes au niveau des essieux subissent une contrainte diagonalement opposée de telle sorte que les forces de contact des roues sont augmentées ou diminuées conformément aux différents coefficients de friction mesurés de telle sorte que la roue avant à µ élevé et la roue arrière à µ faible soient sollicitées et que simultanément la roue avant à µ faible et la roue arrière à µ élevé soient soulagées.

2. Système pour raccourcir la course de freinage sur un véhicule automobile destiné à mettre en oeuvre le procédé selon la revendication précédente, **caractérisé en ce que** sont prévus des capteurs pour mesurer un coefficient de friction (µ) ou une valeur comparable au coefficient de friction (µ) entre chaque roue et la surface de la chaussée, des moyens de comparaison pour comparer entre eux les coefficients de friction des roues mesurés avec les capteurs du côté gauche et du côté droit du véhicule et des moyens de commande pour délivrer un signal de commande au servomécanisme du système de stabilisation du mouvement de roulis, de telle sorte que les essieux sont soumis à une contrainte diagonalement opposée de sorte que les forces de contact des roues sont augmentées ou diminuées conformément aux différents coefficients de friction mesurés de telle sorte que la roue avant à µ élevé et la roue arrière à µ faible soient sollicitées et que simultanément la roue avant à µ faible et la roue arrière à µ élevé soient soulagées.

3. Système selon la revendication 2, **caractérisé en ce que** les capteurs sont reliés avec un calculateur de processus d'un dispositif de commande de véhicule qui contient les moyens de comparaison et les moyens de commande.

4. Système selon la revendication 3, qui présente en plus de cela un système de direction automatique qui intervient sur chaque essieu articulé, **caractérisé en ce que** le calculateur de processus est en plus configuré pour compenser le moment de lacet du véhicule, provoqué par le ralentissement accru de la roue à µ élevé, en délivrant des signaux de commande de l'angle de direction au système de direction automatique de manière à ce que soit généré un angle de direction supplémentaire de compensation du moment de lacet produit en plus de l'angle de volant établi au niveau du volant.

5. Système selon la revendication 4, **caractérisé en ce que** le calculateur de processus délivre simultanément aux servomécanismes du système de direction automatique les signaux générés pour le réglage de l'angle de direction supplémentaire et les signaux générés pour l'application de la contrainte diagonalement opposée aux essieux.
